(19) Europäisches Patentamt
European Patent Office
Office européen des brevets

(11) Publication number: **0 214 292**
**A1**

(12) # EUROPEAN PATENT APPLICATION

published in accordance with Art. 158(3) EPC

(21) Application number: 86900247.7

(22) Date of filing: 13.12.85

Data of the international application taken as a basis:

(86) International application number:
**PCT/JP85/00684**

(87) International publication number:
**WO86/05193 (12.09.86 86/20)**

(51) Int. Cl.⁴: **C 08 K 5/52**
C 08 L 75/04, C 08 G 18/08

(30) Priority: 04.03.85 JP 42242/85
04.03.85 JP 42243/85

(43) Date of publication of application:
**18.03.87 Bulletin 87/12**

(84) Designated Contracting States:
**CH DE GB IT LI**

(71) Applicant: Kao Corporation
14-10, Nihonbashi Kayabacho 1 chome
Chuo-Ku Tokyo 103(JP)

(72) Inventor: YAMAZAKI, Yoshihiro 1130, Nishihama
Wakayama-shi
Wakayama-ken 641(JP)

(72) Inventor: KANNEN, Naoki 744-20, Sakata
Wakayama-shi
Wakayama-ken 641(JP)

(72) Inventor: SAWADA, Michitaka 1450, Nishihama
Wakayama-shi
Wakayama-ken 641(JP)

(74) Representative: Bannerman, David Gardner et al,
Withers & Rogers 4 Dyer's Buildings Holborn
London, EC1N 2JT(GB)

(54) **POLYURETHANE STABILIZER COMPOSITION.**

(57) A polyurethane with good stability against heat and light is obtained by using: a) an ultraviolet absorber; and b) a tertiary phosphite represented by general formula (I) wherein $R_1$, $R_2$ and $R_3$ may be the same or different, and each represents an alkyl group, a cycloalkyl group, an aryl group, an alkylaryl group, or an arylalkyl group) and containing 4.0 to 14.0 wt.% phosphorus. An antioxidant or a nitrogen-containing compound may be optionally added to further improve the stability of the polyurethane.

EP 0 214 292 A1

Croydon Printing Company Ltd.

# DESCRIPTION

## STABILIZER COMPOSITION FOR POLYURETHANE

Technical Field:

This invention relates to a composite stabilizer, i.e., a stabilizer composition, for polyurethane and to a process for the production of a polyurethane resin stabilized by the same. More particularly, it realtes to a stabilizer capable of stabilizing a synthetic resin against environmental factors including light, heat, moisute, oxygen and combustion gases and to a process for the production of a highly stable polyurethane resin.

Prior Art:

Polyurethane, which is a polymer having many valuable properties such as excellent impact resistance, chemical resistance, abrasion resistance and low-temperature resistance, has wide applications in various fields. However it is known that polyurethane is liable to be affected by environmental factors including light, heat, moisture, oxygen and combustion gases. These environmental factors may cause undesirable deterioration of the surface of a molded polyurethane article, e.g. matting, cracking and changes in hue.

Under these circumstances, it has been attempted to

add various ultraviolet absorbers, antioxidants or stabilizers such as piperidine compounds to polyurethane or to add or apply white pigments comprising, for example, titanium white thereon to thereby improve the poor weather resistance of the same.

Further various stabilizers have been developed in order to improve the poor weather resistance of polyurethane. For example, Japanese Patent Laid-Open No. 100848/1981 discloses a stabilizer for polyurethane which comprises a combination of a phenylenediamine compound with a sterically hindered phenol compound, a phosphite compound, a quinoline compound, a benzotriazole compound, a thiourea compound, a piperidine compound or a metal oxide. Japanese Patent Laid-Open No. 49653/1982 discloses a process for improving the weather resistance of polyurethane with the use of a hindered phenol compound and a phosphite.

However these conventional stabilizers for polyurethane are not always sufficient in maintaining the whiteness of polyurethane. Thus, the stabilizer according to Japanese Patent Laid-Open NO. 100848/1981 serves to prevent colored polyurethane from matting and cracking, but it causes undesirable yellowing when employed in white polyurethane, because it contains a phenylenediamine compound as an essential ingredient.

On the other hand, the stabilizer according to Japanese Patent Laid-Open No. 49653/1982 can not exhibit a sufficient effect over a prolonged period of time.

Thus it has been attempted to develop various stabilizers for polyurethane in order to produce polyurethane resins which can withstand prolonged use. Some stabilizers bring about a trouble that the poor solubilities thereof in polyurethane result in bleeding of the same on the surface of polyurethane, which significantly lowers commercial value of the product. Moreover this effects are yet insufficient. Therefore it has been urgently demanded to develop polyurethane which can withstand prolonged use and have an improved weather resistance without any bleeding.

Disclosure of the Invention:

We have studied to overcome the abovementioned problems that no known stabilizer is effective in maintaining the whiteness of polyurethane and that there is no polyurethane which can be used over a prolonged period of time. As a result, we have completed the present invention. Accordingly, the present invention provides a stabilizer composition for use in the production of polyurethane which comprises:

(a) ultraviolet absorber(s); and

(b) tertiary phosphite(s) of the general formula (I):

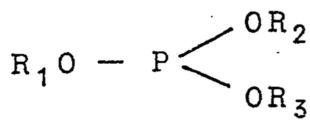

(I)

wherein $R_1$, $R_2$ and $R_3$ may be the same or different from each other and each represents an alkyl, a cycloalkyl, an aryl, an alkylaryl or an arylalkyl group;
which contains 4.0 to 14.0 % by weight of phosphorus.

Further the stabilizer of the present invention may preferably contain antioxidant(s) or nitrogen-containing compound(s). Preferable examples of the nitrogen-containing compound(s) are 1,1-dialkyl-substituted semicarbazides or carbazates.

The present invention further provides a process for the production of a polyurethane resin from isocyanate compound(s) and active hydrogen-containing compound(s), by using a stabilizer which comprises:

(a) ultraviolet absorber(s); and

(b) tertiary phosphite(s) of the general formula (I):

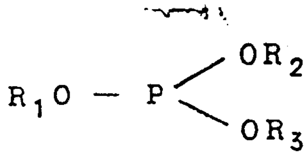 (I)

wherein $R_1$, $R_2$ and $R_3$ may be the same or different from each other and each represents an alkyl, a cycloalkyl, an aryl, an alkylaryl or an arylalkyl group;
which contains 4.0 to 14.0 % by weight of phosphorus.

As described above, antioxidant(s) or nitrogen-containing compound(s) may be further added thereto. Preferable examples of the nitrogen-containing compound(s) are 1,1-dialkyl-substituted semicarbazides or carbazate having the following groups (II) to (IV):

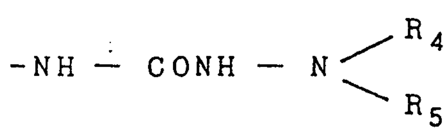 (II) ,

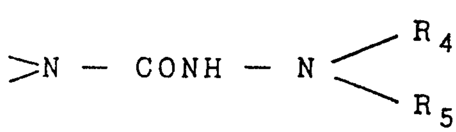 (III) , and

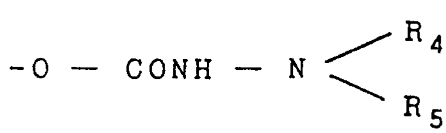 (IV)

wherein $R_4$ and $R_5$ may be the same or different from each other and each represents an alkyl

group or a substituted alkyl group having one to ten carbon atoms, or $R_4$ and $R_5$ may be combined together to form a ring which may be a heterocyclic ring.

The composite stabilizer composition of the present invention can highly improve the weather resistance of polyurethane to thereby significantly prevent molded polyurethane articles from browning.

This unexpected effect of the present invention is brought about by the combiend use of ultraviolet absorber(s), tertiary phosphite(s) and, preferably, 1,1-dialkyl-substituted semicarbazide(s) or carbazate(s), each constituting the stabilizer of the present invention. None of these compounds can exhibit such an effect when employed alone.

The ultraviolet absorber(s) used in the present invention include known compounds such as salicylic acid derivatives, benzophenone derivatives, benzotriazole derivatives, nitrile derivatives and oxalanilide derivatives. Among these compounds as mentioned above, benzotriazole derivatives such as 2-(2'-hydroxy-5'-methylphenyl)benzotriazole,2-(2'-hydroxy-5'-t-butylphenyl)benzotriazole, 2-(2'-hydroxy-3',5'-di-t-butylphenyl)benzotriazole, 2-(2'-hydroxy-3'-t-butyl-5'-methylphenyl)-5-chlorobenzotriazole, 2-(2'-hydroxy-3',-

5'-di-t-butylphenyl)-5-chlorobenzotriazole and 2-(2'-hydroxy-3',5'-dialkylphenyl)-benzotriazole are particularly preferable.

One of these ultraviolet absorbers or a mixture of two or more of them may be used in the present invention.

The tertiary phosphite(s) used in the present invention are those represented by the general formula (I), wherein $R_1$, $R_2$ and $R_3$ are as defined above, which contains 4.0 to 14.0 % by weight, preferably 6.0 to 8.0 % by weight, of phosphorus. Examples thereof are triisodecyl phosphite, phenyl diisodecyl phosphite, diphenyl nonylphenyl phosphite and triisooctyl phosphite. One of these phosphites or a mixture of two or more of them may be used in the present invention.

These tertiary phosphites or a mixture of two or more of them may be used in the present invention together with the ultraviolet absorber(s) and, preferably, antioxidant(s) and/or 1,1-dialkyl-substituted semicarbazide(s) or carbazate(s).

Any hindered phenol compound having at least one branched lower aliphatic hydrocarbon group attached at the ortho-position may be used in the present invention as an antioxidant. Particularly preferable hindered

phenol compounds are those having one to four phenol rings per molecule. When two or more phenol rings are present in a molecule, the binding manner thereof is not particularly limited. Preferable examples of the branched lower aliphatic hydrocarbon group are those having three to seven carbon atoms, such as isopropyl, isobutyl, t-butyl, isopentyl, t-pentyl or isohexyl group. Among these groups as cited above, the t-butyl group is particularly preferable.

Various substituents may be further introduced into the above phenol compound. Examples of the hinderd phenol compound are as follows:

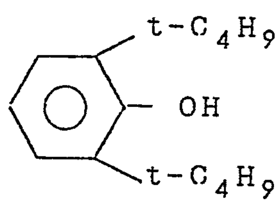

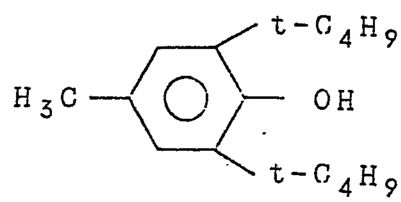

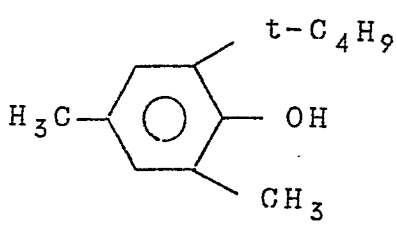

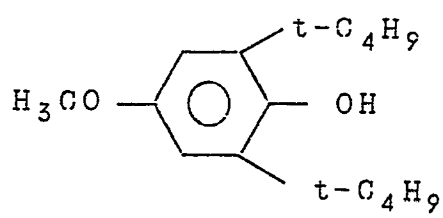

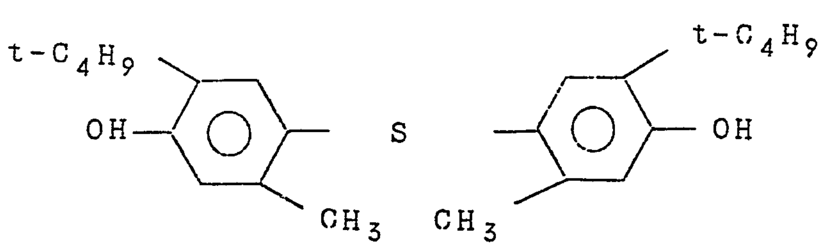

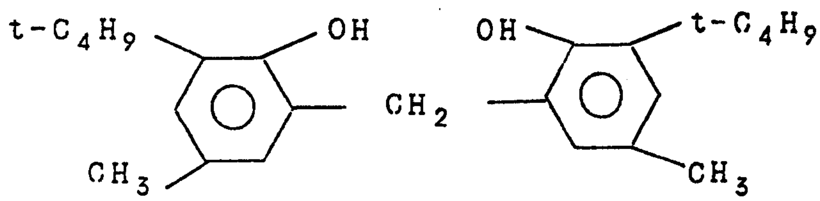

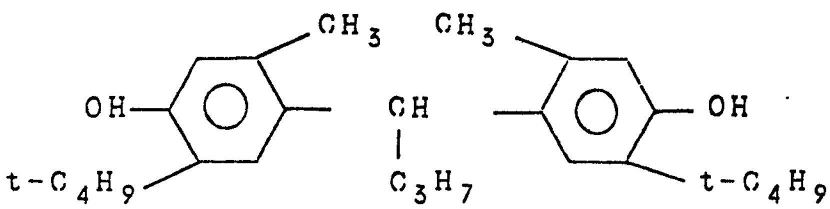

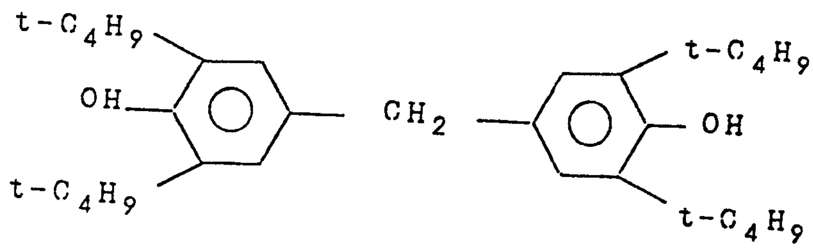

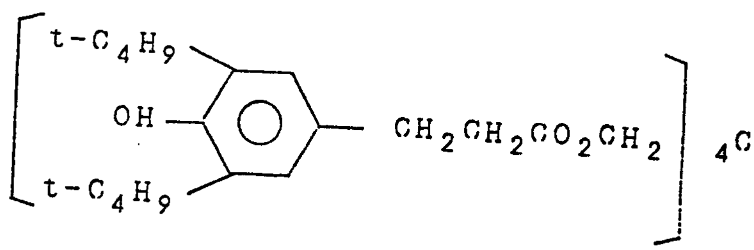

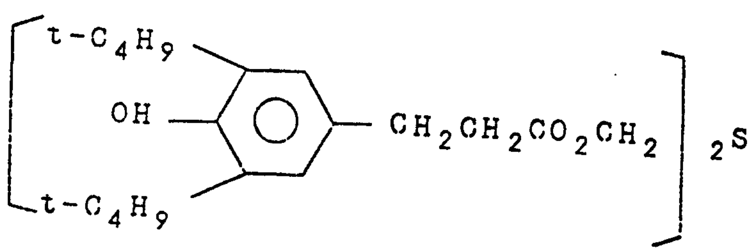

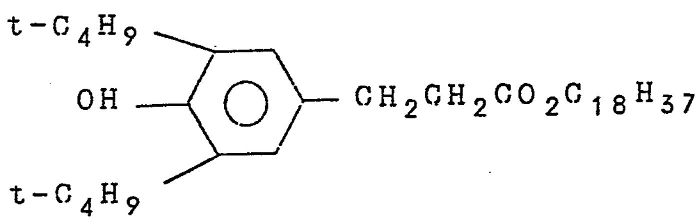

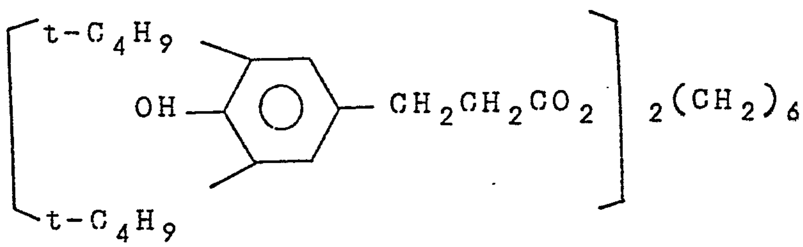

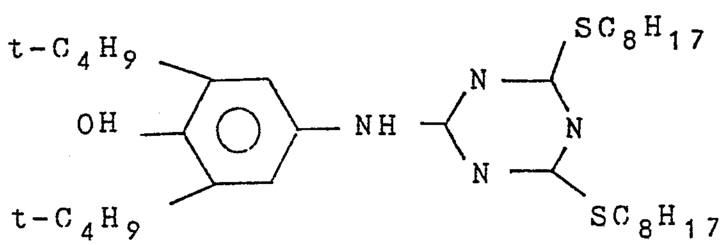

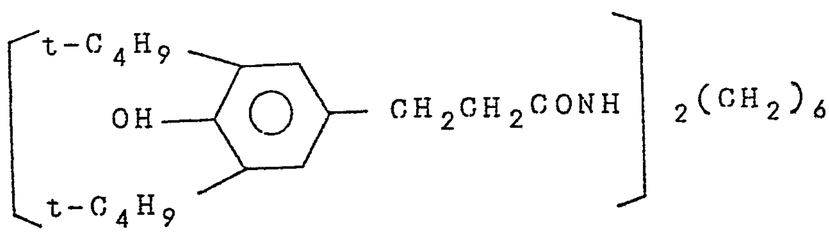

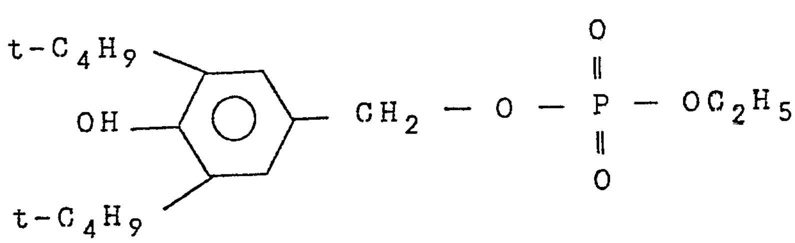

One of these antioxidants or a mixture of two or more of them may be used in the present invention.

The 1,1-dialkyl-substituted carbazide(s) or carbazate(s) used in the present invention are those having the following groups (II) to (IV):

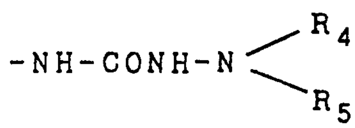

(II),

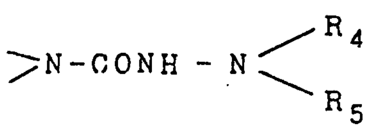

(III), and

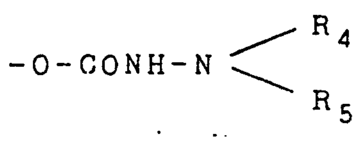

(IV)

wherein $R_4$ and $R_5$ may be the same or different from each other and each represents an alkyl or a substituted alkyl group having one to ten carbon atoms; or $R_4$ and $R_5$ may be combiend together to form a ring which may be a heterocyclic ring.

Examples thereof are as follows:

(A) $(CH_3)_2\ NNHCONH(CH_2)_6\ NHCONHN(CH_3)$

m.p.: 144 - 146°C

(B) biuret triisocyanate (cf. DAS 1,101,394)

$OCN(CH_2)_6\ NCONH(CH_2)_6NCO$

$\qquad\qquad\quad |$

$\qquad\qquad\quad CONH(CH_2)_6NCO$

+ 3 mol of 1,1-dimethylhydrazine

(C) biuret triisocyanate (the same as B)

+ 2 mol of 1,1-dimethylhydrazine and 1 mol of ethyleneimine

(D) biuret triisocyanate (the same as B)

+ 1 mol of 1,1-dimethylhydrazine and 2 mol of ethyleneimine

(E) biuret triisocyanate (the same as B)

+ 3 mol of N-aminomorpholine

(F) biuret triisocyanate (the same as B)

+ 2 mol of N-aminomorpholine and 1 mol of ethyleneimine

(G) 1,1,5,5-tetramethylcarbohydrazide

$(CH_3)_2NNHCONHN(CH_3)_2$ m.p.: 151 - 153°C

(H) $(CH_3)_2NNHCONHNHCONH(CH_2)_6NHCONHNHCONHN(CH_3)_2$ m.p.: 225 - 227°C

(I)

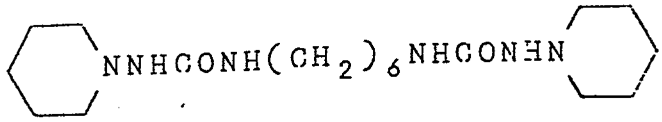

m.p.: 173 - 175°C

(J)

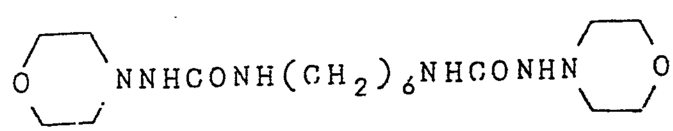

m.p.: 196 - 199°C

(K) 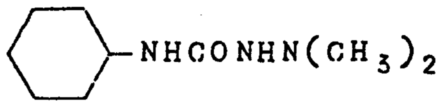

m.p.: 78 - 80°C

(L) $C_{18}H_{37}NHCONHN(CH_3)_2$

m.p.: 74 - 76°C

(M) 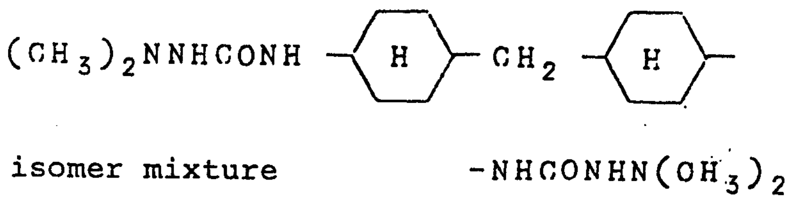

isomer mixture

(N) 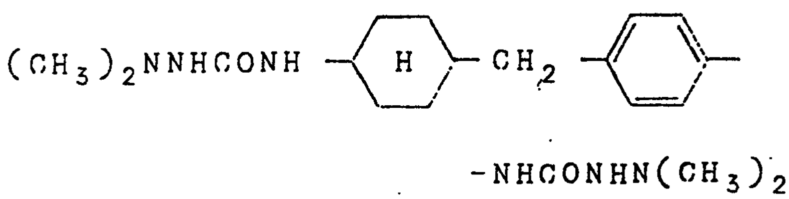

m.p.: 152 - 154°C

(O) 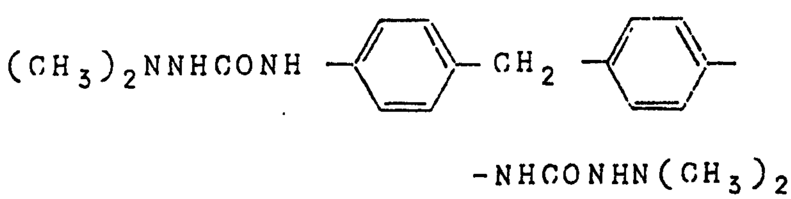

m.p.: 150°C

(P) 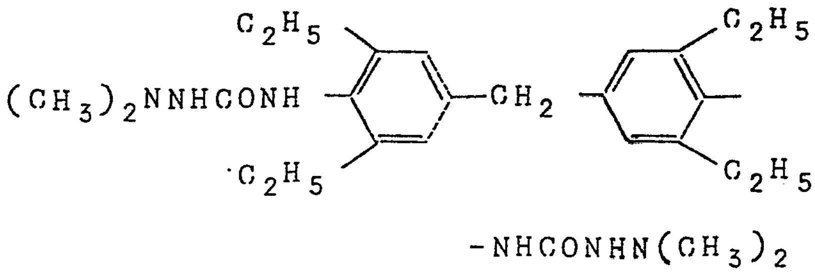

m.p. > 350°C n.z.

(Q) 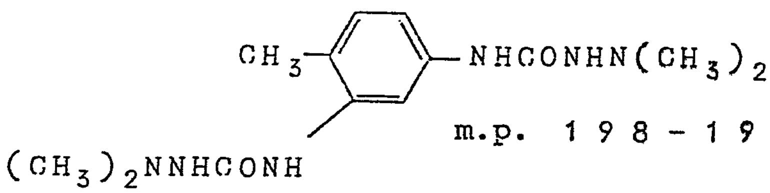

m.p. 198 - 199 ℃

(R) 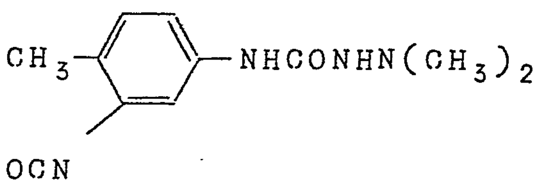

(S) 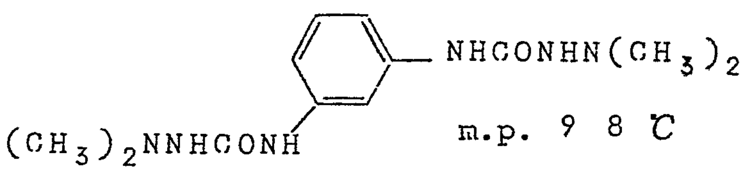

m.p. 98 ℃

(T) 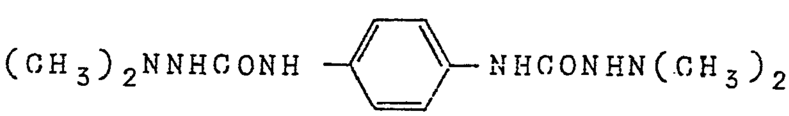

m.p. 250 ℃ n.z.

(U) 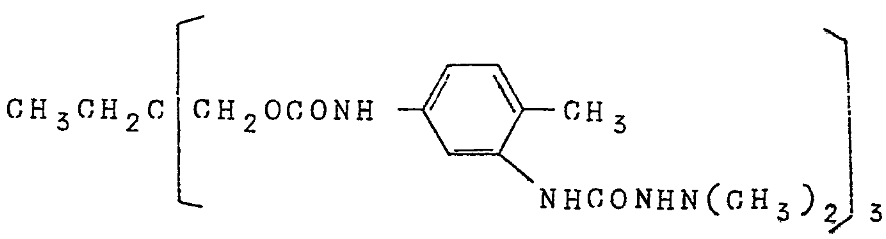

(V) 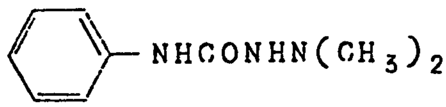

m.p. 106-108 ℃

(W) 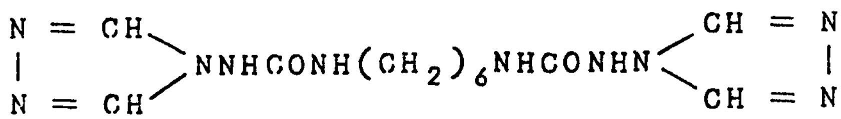

m.p. 246-247 ℃

(X) $(CH_3)_2NNHCOOCH_2CH_2OCONHN(CH_3)_2$

m.p. 133-135 ℃

(Y) 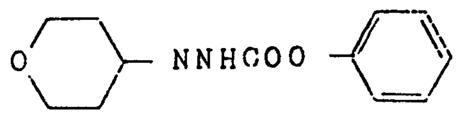 m.p. 144-146 ℃

(Z) 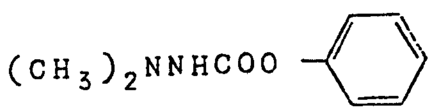 m.p. 74-74.5 ℃

One of these 1,1-dialkyl-substituted semicarbazides or carbazates or a mixture of two or more of them may be employed in the present invention together with the ultraviolet absorber(s), tertiary phosphite(s) and preferably with antioxidant(s).

The phosphorus content of the tertiary phosphite(s) in the present invention may be readily calculated. Alternately it may be experimentally determined in the following manner.

(1) Preparation of test solution

0.1 g of a sample containing 4 to 16 mg of phosphorus is accurately weighed in a 100-ml Kjeldahl flask and 2 ml of concentrated sulfuric acid is added thereto, followed by heating. Before the mixture is carbonized, a 30 % aqueous solution of hydrogen peroxide is added dropwise to thereby decompose the mixture until the solution becomes clear. Then the solution is strongly heated until white smoke of sulfuric acid is evolved. After cooling, the solution is transferred to a 100-ml measuring flask and water is added thereto to give a total volume of 100 ml. A test solution is thus prepared.

(2) Preparation of calibration curve

0 ml, 2 ml, 4 ml 6 ml and 8 ml of a standard phosphorus solution, which is prepared by dissolving 4.3939 g of potassium primary phosphate in water to give a volume of 1 ℓ, are each introduced into a 100-ml measuring flask and 50 ml of water is added thereto. 20 ml of a molybdovanadate solution is added thereto, and water is added thereto to give a total volume of 100 ml. After allowing to stand for 30 min, the solution is transferred into a 10-mm cell where the absorbance of the solution is determined at 400 nm and compared with that of the control solution to thereby prepare a calibration curve.

(3) Determination

5 ml of the test solution is introduced into a 100-ml measuring flask and approximately 50 ml of water and 20 ml of a molybdovanadate solution are added thereto. Then the mixture is subjected to the same procedure as described above relating to the preparation of the calibration curve. The absorbance is determined and the phosphorus content(%) is determined based on the calibration curve.

The amount of the stabilizer of the present invention to be added is not strictly limited and should be determined depending on the condition under which the polyurethane composition is used. Generally the ultraviolet absorber(s), the tertiary phosphite(s), the antioxidant(s) and the 1,1-dialkyl-substituted semicarbazide(s) or carbazate(s) are added in an amount of 0.05 to 5 % by weight, preferably 0.1 to 3 % by weight, based on the polyurethane. A smaller amount of the additives might result in an insufficient stability, while a larger amount thereof might lower the physicochemical properties including strength and elongation of the product.

It is preferable that the stabilizer of the present invention is added by previously dispersing the same in a portion of the starting material for

polyurethane or by disolving the same in the starting material for polyurethane under heating. It is particularly preferable to blend the phosphite(s) of the feneral formula (I) with isocyanate compound(s).

The stabilizer of the present invention is available in every known polyurethane. It is suitable for producing polyurethane comprising a polyisocyanate compound selected from along, for example, tolylene diisocyanate, m-phenylene diisocyanate, p-phenylene diisocyanate, xylylene diisocyanate, 4,4'-diphenylmethane diisocyanate, hexamethylene diisocyanate, isophorone diisocyanate, polymethylenepolyphenyl isocyanate, 3,3"-dimethyl-4,4'-diphenylmethane diisocyanate, 3,3'-dimethyl-4,4'-biphenylene diisocyanate, 3,3'-dichloro-4,4'-biphenylene diisocyanate, 4,4'-biphenylene diisocyanate, 1,5-naphthalene diisocyanate, a mixture thereof optionally denatured or prepolymers obtained therefrom. It is particularly suitable for producing polyurethane with the use of tolylene diisocyanate, 4,4'-diphenylmethane diisocyanate, a mixture thereof optionally denatured or prepolymers obtained therefrom.

Examples of the active hydrogen-containing compound used in the production of a polyurethane

resin according to the present invention are low molecular weight polyols such as ethylene glycol, propylene glycol, 1,4-butanediol, neopentyl glycol, 1,6-hexanediol, glycerol, trimethylolpropane, 1,2,6-hexanetriol and pentaerithritol; amine compounds such as ethylenediamine, 4,4'-methylenebis-2-chloroaniline and 4,4'-methylenebis-2-ethylaniline; polyether polyols obtained by adding alkylene oxides such as ethylene oxide or propylene odixe to low molecular weight polyols or amine compounds; or polytetramethylene ether glycol. Further polyesterpolyols which have terminal hydroxyl groups and are prepared by condensing polyhydric alcohols such as ethylene glycol, propylene glycol or 1,4-butanediol with polybasic acids such as phthalic, maleic, malonic, succinic, adipic or terephthalic acid, polycaprolactone polyol, polycarbonate polyol, acryl polyol, castor oil and tall oil may be used. Furthermore liquid rubbers having a hydroxyl, an amino, an imino, a carboxyl or a mercapto group at a terminal of the molecule or a mixture thereof may be used.

In the process of the production of a polyurethane resin according to the present invention, catalyst(s) may be added to thereby lower the reaction temperature or shorten the reaction period. Examples of the catalysts

are amine compounds such as triethylenediamine, tetrametylethylenediamine and tetramethylhexanediamine and salts thereof, organometallic compounds such as dibutyltin dilaurate, tin octanoate, lead octanoate and manganese octanoate and mixtures thereof.

The polyurethane resin may further contain other additives such as blowing agents including water and organic solvents having a low boiling point; colorants including titanium white and carbon black; fillers including calcium carbonate, silica, clay, organic fibers and inorganic fibers; softening agents such as processed oils; foam stabilizers; antistatic agents; antioxidants and photostabilizers, if required.

Best Modes for Carrying Out the Invention:

To further illustrate the present invention, and not by way of limitation, the following Examples and Comparative Examples will be given. Unless otherwise stated, all parts as used in the Examples and Comparative Examples are by weight.

Examples 1 to 6

To 100 parts of polyesterpolyol having a hydroxyl value of 86 and an average molecular weight of 13,00, each ultraviolet absorber as shown in Table 1 (Ex. 1 to 6) was added in a specified amount. The mixture was stirred at 60 to 80°C for two to six hours

to dissolve the reactants. To the polyol component thus obtained, 12 parts of ethylene glycol, 0.4 part of water, 0.8 part of triethylenediamine and one part of a silicone foam stabilizer were added, followed by mixing to thereby give a polyol component.

Separately 100 parts of 4,4'-diphenylmethane diisocyanate was reacted with 66.5 parts of polyester polyol of a hydroxyl value of 56 and an average molecular weight of 2000 at 60°C for two hours. To the polyurethane prepolymer (NCO % of 18.5) thus obtained, each tertiary phosphite as shown in Table 1 (Ex. 1 to 6) was added in a specified amount, followed by mixing to thereby give an isocyanate component.

Then 83 parts of the above polyol component and 100 parts of the isocyanate component were thoroughly mixed under stirring. Then the mixture was poured into an aluminum mold at 45 to 50°C on which a silicone parting agent was applied. After five minutes, the content was taken off. Thus a white cured sheet (150 mm x 150 mm) of 0.65 in specific gravity and 5 mm in thickness was obtained.

Six polyurethane sheets produced in Examples 1 to 6 were subjected to an irradiation test under a carbon-arc weather meter for 30 hours. Then the color of each piece was measured with a color meter, which is

represented by yellow index (YI). Table 1 shows the result.

Examples 7 to 13

To 100 parts of polyester polyol having a hydroxyl value of 86 and an average molecular weight of 1300, each ultraviolet absorber and 1,1-dialkyl-substituted carbazide or carbazate as shown in Table 1 (Ex. 7 to 13) were added each in a specified amount. The mixture was stirred at 60 to 80°C for two to six hours to dissolve the reactants. To the polyol component thus obtained, 12 parts of ethylene glycol, 0.4 part of water, 0.8 part of triethylenediamine and one part of a silicone foam stabilizer were added, followed by mixing, thus giving a polyol component.

Separately 100 parts of 4,4'-diphenylmethane diisocyanate was reacted with 66.5 parts of polyester polyol of a hydroxyl value of 56 and an average molecular weight of 2000 at 60°C for two hours. To the polyurethane prepolymer (NCO % of 18.5) thus obtained, each tertiary phosphite as shown in Table 1 (Ex. 7 to 13) was added in a specified amount, followed by mixing to thereby give an isocyanate component.

Then 83 parts of the above polyol component and 100 parts of the isocyanate component were thoroughly mixed under stirring. Then the mixture was poured into

an aluminum mold at 45 to 50°C on which a silicone parting agent was applied. After five minutes, the content was taken off. Thus a white cured sheet (150 mm x 150 mm) of 5 mm in thickness was obtained.

Comparative Examples 1 to 5

Compared to Examples 1 to 13 wherein stabilizers were added, a polyurethane resin to which no stabilizer was added was subjected to the same test as described in these Examples in Comparative Example 1.

In Comparative Example 2, a polyurethane resin was produced by adding the same ultraviolet stabilizer as the one used in Examples 1 and 2 alone to the polyol component.

In Comparative Example 3, a polyurethane resin was produced by adding the same phosphite as the one used in Example 2 alone to the isocyanate component as a stabilizer.

In Comparative Example 4, a polyurethane resin was produced by adding the same 1,1-dialkyl-substitued semicarbazine and the one used in Examples 7 and 9 alone to the polyol component as a stabilizer.

In Comparative Example 5, a polyurethane resin was produced by adding the same 1,1-dialkyl-substituted semicarbazide as the one used in Examples 7 and 9 to the polyol component as a stabilizer.

In each Comparative Example, the polyurethane resin was produced in the same manner as the one described above except the addition of the stabilizer(s).

12 polyurethane sheets produced in Examples 1 to 13 and Comparative Examples 1 to 5 were subjected to an irradiation test under a carbon-arc sunshine weather meter for 30 hours. Then the color of each piece was measured with a color meter, which is represented by yellow index (YI). Table 1 shows the result.

The apparatuses used in the above test are as follows:

(1) carbon-arc weather meter: mfd. by Suga Shikenki, K.K., Due-cycle Sunshine Superlonglife Weather Meter WEL-SUN-DC, and

(2) color meter; mfd. by Suga Shikenki K.K., SM Color Computer SM-3.

Table 1

| | Stabilizer | Phosphorus content(%) | Amount (part) | Yellow index (YI) |
|---|---|---|---|---|
| Ex. 1 | 2-(2'-hydroxy-5'-methylphenyl)benzotriazole | | 1.0 | 41 |
| | phenyl diisodecyl phosphite | 7.1 | 1.0 | |
| Ex. 2 | 2-(2'-hydroxy-5'-methylphenyl)benzotriazole | | 1.0 | 41 |
| | diphenyl nonylphenyl phosphite | 7.1 | 1.0 | |
| Ex. 3 | 2-(2'-hydroxy-3',5'-di-t-butylphenyl)benzotriazole | | 1.0 | 40 |
| | triisooctyl phosphite | 7.4 | 1.0 | |
| Ex. 4 | 2-(2'-hydroxy-3',5'-dialkylphenyl)benzotriazole | | 1.0 | 41 |
| | triisodecyl phosphite | 6.2 | 1.0 | |
| Ex. 5 | 2-(2'-hydroxy-5'-methylphenyl)benzotriazole | | 1.0 | |
| | diphenyl nonylphenyl phosphite | 7.1 | 0.5 | 40 |
| | phenyl diisodecyl phosphite | 7.1 | 0.5 | |
| Ex. 6 | 2-(2'-hydroxy-3',5'-di-t-butylphenyl)benzotriazole | | 0.5 | |
| | 2-(2'-hydroxy-3',5'-dialkylphenyl)benzotriazole | | 0.5 | 40 |
| | phenyl diisodecyl phosphite | 7.1 | 1.0 | |

Table 1 (Continued)

| | Stabilizer | Amount (part) | Yellow index (YI) |
|---|---|---|---|
| Ex. 10 | 2-(2'-hydroxy-3',5'-di-t-butylphenyl)benzotriazole | 1.0 | |
| | phenyl diisodecyl phosphite | 1.0 | 29 |
| | phenyl N-morpholinocarbamate *1 | 1.0 | |
| Ex. 11 | 2-(2'-hydroxy-3',5'-dialkylphenyl)benzotriazole | 1.0 | |
| | diphenyl nonylphenyl phosphite | 1.0 | 25 |
| | phenyl 1,1-dimethylcarbazate *2 | 1.0 | |
| Ex. 12 | 2-(2'-hydroxy-5'-methylphenyl)benzotriazole | 1.0 | |
| | triisooctyl phosphite | 1.0 | 26 |
| | 1,6-hexamethylenebis(N-morpholinocarbamide) *3 | 1.0 | |
| Ex. 13 | 2-(2'hydroxy-3',5'-di-t-butylphenyl)benzotriazole | 0.5 | |
| | 2-(2'-hydroxy-3',5'-dialkylphenyl)benzotriazole | 0.5 | |
| | phenyl diisodecyl phosphite | 1.0 | 24 |
| | 1,6-hexamethylenebis(N,N-cyclopentylene-semicarbazide) *4 | 1.0 | |

*1 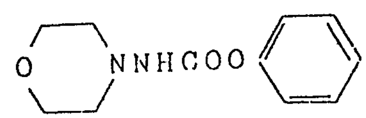

*2 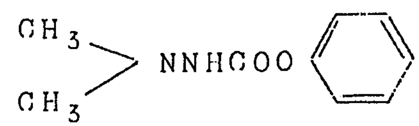

*3 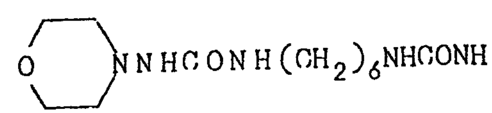

*4 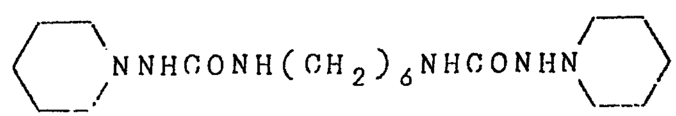

Table 1 (Continued)

| | Stabilizer | Amount (part) | Yellow index (YI) |
|---|---|---|---|
| Ex. 7 | 2-(2'-hydroxy-5'-methylphenyl)benzotriazole | 1.0 | 24 |
| | phenyl diisodecyl phosphite | 1.0 | |
| | 1,6-hexamethylenebis(N,N-dimethylsemicarbazide) | 1.0 | |
| Ex. 8 | 2-(2'-hydroxy-5'-methylphenyl)benzotriazole | 1.0 | 25 |
| | diphenyl nonylphenyl phosphite | 1.0 | |
| | 1,1,5,5-tetramethylcarbohydrazide | 1.0 | |
| Ex. 9 | 2-(2'-hydroxy-5'-methylphenyl)benzotriazole | 0.5 | 23 |
| | 2-(2'-hydroxy-3',5'-di-t-butylphenyl)benzotriazole | 0.5 | |
| | triisodecyl phosphite | 1.0 | |
| | 1,6-hexamethylenebis(N,N-dimethylsemicarbazide) | 1.0 | |
| Comp. Ex. 1 | none | - | 80 |
| Comp. Ex. 2 | 2-(2'-hydroxy-5'-methylphenyl)benzotriazole | 1.0 | 63 |
| Comp. Ex. 3 | diphenyl nonylphenyl phosphite | 1.0 | 69 |
| Comp. Ex. 4 | 1,6-hexamethylenebis(N,N-dimethylsemicarbazide) | 1.0 | 65 |
| Comp. Ex. 5 | 2-(2'-hydroxy-5'-methylphenyl)benzotriazole | 1.0 | 45 |
| | 1,6-hexamethylenebis(N,N-dimethylsemicarbazide) | 1.0 | |

As described above in detail referring to Examples, the composite stabilizer for polyurethane of the present invention exhibits much better effects of maintaining the whiteness of a white polyurethane resin and of preventing a colored polyurethane resin from undergoing discoloration and color fading than conventional ones. The stabilizer of the present invention can prevent polyurethane resins prepared from materials liable to be discolored, e.g., tolylene diisocyanate or 4,4'-diphenylmethane diisocyanate from suffering undesirable changes including discoloration and color fading. No conventional stabilizer can exhibit such an effect. This effect of the stabilizer of the present invention is brought about by the combined use of three or four compounds selected from among the ultraviolet absorbers, phosphites, antioxidants and/or nitrogen-containing compounds. None of these compound employed alone nor a mixture of two among them can achieve such an effect as shown by Comparative Examples.

The stabilizer of the present invention can exhibit its effect not only on colored polyurethane resins but also on white polyurethane resins so that it is available in maintaining a high commercial value of polyurethane products, for example, sport shoes, wherein high whiteness is particularly required.

What is claimed is:

1. A stabilizer composition which comprises:

(a) ultraviolet absorber(s); and

(b) tertiary phosphite(s) of the general formula (I):

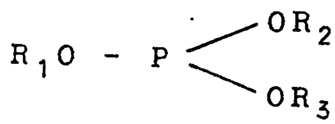

(I)

wherein $R_1$, $R_2$ and $R_3$ may be the same or different from each other and each represents an alkyl, a cycloalkyl, an aryl, an alkylaryl or an arylalkyl group;

which contains 4.0 to 14.0 % by weight of phosphorus.

2. A stabilizer composition as set forth in Claim 1, wherein said tertiary phosphite(s) contain 6.0 to 8.0 % by weight of phosphorus.

3. A stabilizer composition as set forth in Claim 1 or 2, which further contains antioxidant(s) and/or nitrogen-containing compound(s).

4. A stabilizer composition as set forth in Claim 3, wherein said nitrogen-containing compound(s) are 1,1-dialkyl-substituted semicarbazide(s) or carbazate(s) having the following groups (II) to (IV):

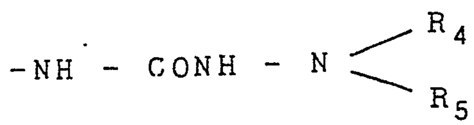 (II)

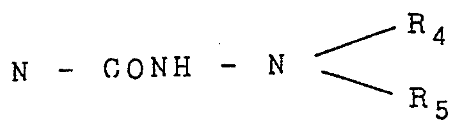 (III), and

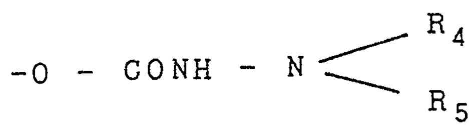 (IV)

wherein $R_4$ and $R_5$ may be the same or different from each other and each represents an alkyl group or a substituted alkyl group having one to ten carbon atoms, or $R_4$ and $R_5$ may be combined together to form a ring which may be a heterocyclic ring.

5. A process for the production of a polyurethane resin from isocyanate compound(s) and active hydrogen-containing compound(s), which comprises using:

(a) ultraviolet absorber(s) and

(b) phosphite(s) of the general formula (I):

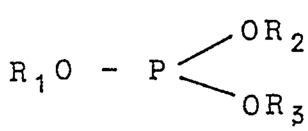 (I)

wherein $R_1$, $R_2$ and $R_3$ may be the same or different from each other and each represents

an alkyl, a cycloalkyl, an aryl, an alkylaryl or an arylalkyl group; which contain 4.0 to 14.0 % by weight of phosphorus.

6. A process for the production of a polyurethane resin as set forth in Claim 5, wherein said phosphite(s) of the general formula (I) contains 6.0 to 8.0 % by weight of phosphorus.

7. A process for the production of a polyurethane resin as set forth in Claim 5, wherein said phosphite(s) of the general formula (I) is previously blended with the isocyanate compound(s).

8. A process for the production of a polyurethane resin as set forth in Claim 5, wherein antioxidant(s) and/or nitrogen-containing compound(s) are further added.

9. A process for the production of a polyurethane resin as set forth in Claim 8, wherein said antioxidant(s) are hindered phenol compound(s) to which at least one branched lower aliphatic hydrocarbon group is bonded at the ortho-position.

10. A process for the production of a polyurethane resin as set forth in Claim 8, wherein said nitrogen-containing compound(s) are 1,1-dialkyl-substituted semicarbazide(s) or carbanate(s) having the

following groups (II) to (IV):

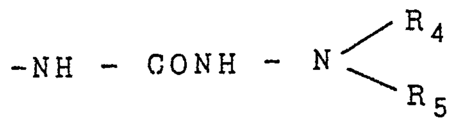 (II)

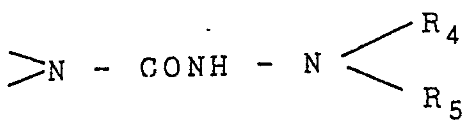 (III), and

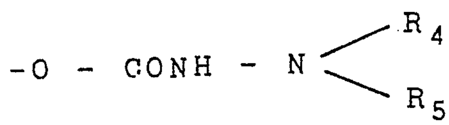 (IV)

wherein $R_4$ and $R_5$ may be the same or different from each other and each represents an alkyl or a substituted alkyl group having one to ten carbon atoms, or $R_4$ and $R_5$ may be combined together to form a ring which may be a heterocyclic ring.

11. A polyurethane resin produced by the process as set forth in Claim 5.

# INTERNATIONAL SEARCH REPORT

0214292

International Application No. PCT/JP85/00684

**I. CLASSIFICATION OF SUBJECT MATTER** (if several classification symbols apply, indicate all) [3]

According to International Patent Classification (IPC) or to both National Classification and IPC

Int.Cl[4] C08K 5/52 , C08L 75/04, C08G 18/08

**II. FIELDS SEARCHED**

Minimum Documentation Searched [4]

| Classification System | Classification Symbols |
|---|---|
| IPC | C08K 5/52, C08L 75/04, C08G 18/08 |

Documentation Searched other than Minimum Documentation to the Extent that such Documents are Included in the Fields Searched [5]

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| Y | JP, B1, 36-20041 (The General Tire and Rubber Company) 21 October 1961 (21. 10. 61) (Family: none) | 1 - 11 |
| Y | JP, B1, 39-18545 (The B.F. Goodrich Company) 1 September 1964 (01. 09. 64) (Family: none) | 1 - 11 |
| Y | JP, B1, 44-2115 (Toyobo Co., Ltd.) 29 January 1969 (29. 01. 69) (Family: none) | 1 - 11 |
| Y | JP, B1, 45-590 (Toyobo Co., Ltd.) 9 January 1970 (09. 01. 70) (Family: none) | 1 - 11 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| February 3, 1986 (03. 02. 86) | February 17, 1986 (17. 02. 86) |
| **International Searching Authority** [1] | **Signature of Authorized Officer** [20] |
| Japanese Patent Office | |